# EUROPÄISCHE PATENTSCHRIFT

(11) **EP 0 795 710 B1**
(45) Veröffentlichungstag und Bekanntmachung des Hinweises auf die Patenterteilung: **18.07.2001**
(21) Anmeldenummer: 97104199.1
(22) Anmeldetag: 13.03.1997
(51) Int. Cl.: F16L 11/15, F16L 59/153

(54) **Druckdichte und mit Wellungen versehene Rohrleitung**
Corrugated conduit for pressurized medium
Conduite ondulée pour medium sous pression

(30) Priorität: 15.03.1996 DE 29604824 U
(43) Veröffentlichungstag der Anmeldung: 17.09.1997
(73) Patentinhaber: Witzenmann GmbH Metallschlauch-Fabrik Pforzheim, 75175 Pforzheim (DE); Gebr. Meibes, Zeitspar-Armaturen für Heiztechnik GmbH, 30938 Burgwedel (DE)
(72) Erfinder: Schüttler, Peter, 75223 Niefern-Öschelbronn (DE); Thüringer, Norbert, 75233 Tiefenbronn (DE); Meibes, Alfred, 30916 Isernhagen (DE); Schultz, Ulrich, Dr., 04289 Leipzig (DE)
(74) Vertreter: Blumenröhr, Dietrich

(56) Entgegenhaltungen:
- EP-A- 0 041 252
- EP-A- 0 349 778
- EP-A- 0 557 594
- DE-C- 4 342 597
- US-A- 3 817 319
- US-A- 5 193 588

## Beschreibung

Die Erfindung betrifft eine Rohrleitung insbesondere zur Verwendung in der Sanitär- und Heizungstechnik, bestehend aus einem druckdichten, mit Wellungen versehenen Metallschlauch.

Anstelle starrer zylindrischer Rohrleitungen werden derartige beispielsweise aus DE-A 43 42 597 bekannte mit Wellungen versehenen Metallschläuche insbesondere dann vorgesehen, wenn Sanitär- und Heizungs- oder Gasleitungen neu oder nachträglich verlegt und hierbei an die örtlichen Gegebenheiten wie Mauervorsprünge, Nischen und dergleichen angepasst werden müssen, da sich durch derartige flexible Schläuche Richtungsänderungen in der Leitungsführung ohne größeren Montageaufwand herstellen lassen. Im Gegensatz dazu müssen bei den starren Rohrleitungen bei Richtungsänderungen Winkelstücke oder Rohrbögen eingesetzt werden, an die sich wiederum weitere Rohrleitungsstücke anschließen, wodurch ein Verlegen dieser Leitungen zumindest in wirtschaftlicher Hinsicht fast nicht vertretbar ist.

Die mit Wellungen versehenen Metallschläuche umgehen diesen Nachteil aufgrund ihrer Flexibilität, die es ermöglicht, selbst Abwinklungen mit kleinsten Radien herzustellen, ohne dass man hierbei ein separates Leitungsteil ansetzen müsste oder eine spezielle Biegevorrichtung benötigte. So vorteilhaft diese Flexibilität im Hinblick auf das Herstellen von Richtungsänderungen ist, so nachteilig wirkt sie sich auf das Verlegen dieser gewellten Metallschläuche aus, da die Flexibilität die Schläuche dazu veranlasst, wieder in die lineare Erstreckungsrichtung zurückzufedern. Das Abwinkeln erfolgt also nur in elastischer Weise, so dass der Metallschlauch in dieser abgewinkelten Position nicht verharrt. Somit muss der Metallschlauch nach jeder Richtungsänderung an der benachbarten Wand festgelegt werden, wobei die hierbei verwendeten Halterungen nicht nur Gewichtskräfte des Schlauches, sondern insbesondere auch die beim Abwinkeln in den Schlauch induzierte Rückstellkraft aufnehmen muss.

Nachteilig ist an den gewellten Schläuchen außerdem, dass sie sich beim Verlegen nicht bzw. kaum schieben lassen, da sie aufgrund ihrer großen Flexibilität seitlich ausknicken. Darüber hinaus besteht ein wesentlicher Nachteil gewellter Schläuche darin, dass sie aufgrund ihrer gegenüber einer zylindrischen Rohrleitung vergrößerten Oberfläche einen höheren Wärmeverlust an die Umgebung - selbst bei einer etwaig vorgesehenen Isolierung - aufweisen, dass hierdurch desweiteren ein vergrößerter Materialaufwand erforderlich ist und dass schließlich die Herstellkosten auch über denjenigen von zylindrischen Rohrleitungen liegen. Schließlich ist auch die Druckfestigkeit herabgesetzt, wenn der Schlauch zur Erzielung seiner Flexibilität einen gegenüber einem Rohr reduzierten Materialquerschnitt aufweist. Die vielen seitlichen Flanken der Wellenberge führen durch den Innendruck zu einer unkontrollierten Längung des Schlauches.

Ein weiteres Problem, das insbesondere bei Sanitärleitungen relevant ist, besteht darin, dass je höher die Profilhöhe der Wellenberge gegenüber den Wellentälern ist und je kürzer die axiale Länge der Wellenberge ist, diese vom Strömungsmedium - in der Regel Wasser - desto weniger stark durchströmt werden und auch die Druckfestigkeit der Schläuche entsprechend geringer ist. Außerdem entstehen in den Wellenbergen strömungsarme Toträume, in denen sich Verunreinigungen wie etwa Bakterien ablagern, welche wiederum die Qualität des Strömungsmediums verschlechtern. Ferner können durch die hohe Elastizität der Wellenflanken strömungsreduzierte Resonanzschwingungen auftreten, die zu Strömungsgeräuschen wie z. B. Pfeiftönen führen.

Hiervon ausgehend liegt der vorliegenden Erfindung die Aufgabe zugrunde, eine Rohrleitung der eingangs geschilderten Art vorzusehen, die sich dadurch auszeichnet, dass sie in einfacher Weise ohne Rohrformteile wie Winkel und Bögen und ohne aufwendige Anpassungsarbeiten verlegbar ist, gleichzeitig eine erhöhte Druckfestigkeit aufweist und deren Wellung so ausgestaltet ist, dass strömungsarme Totzonen und strömungsinduzierte Schwingungen vermieden werden.

Diese Aufgabe wird erfindungsge.mäß durch eine Rohrleitung mit den Merkmalen von Anspruch 1 gelöst. Hierdurch ergibt sich der Vorteil, dass man ein quasi semiflexibles Rohr erhalten kann, das die Vorteile von Wellschläuchen und Rohren miteinander kombiniert, bei gleichzeitiger Vermeidung der jeweiligen Nachteile: Ausschlaggebend für die genannte Semiflexibilität ist ein Zusammenwirken von gegenüber Wellschläuchen erhöhter Wandstärke und flacherer Wellung mit entsprechend reduzierter Wellenanzahl. Durch die Annäherung des gewellten Metallschlauches an ein zylindrisches Rohr lässt sich auch die Druck- und Pulsationsfestigkeit der Rohrleitung gegenüber einem herkömmlichen Wellschlauch vergrößern, da durch die geringe Profilhöhe die für den Reaktionsdruck verantwortliche wirksame Querschnittsfläche reduziert ist und somit keine axiale Längung des Schlauches unter Druck eintritt. Berücksichtigt man die für die Semiflexibilität verantwortlichen Einflussgrößen bei der erfindungsgemäßen Rohrleitung zeichnet sie sich dadurch aus, dass sie in der abgewinkelten Einbaulage verharrt, ohne dass eine Festlegung an der benachbarten Wand unbedingt erforderlich ist. Dies wird dadurch erreicht, dass sich die Abwinklungen lediglich auf die nicht zylindrisch verlaufenden Wellentäler auswirken und dort wegen der geringen Profilhöhe dieser Wellentäler zu einer plastischen Verformung der Rohrleitung führen, während bei den herkömmlichen Wellschläuchen ein bloßes Abwinkeln nur eine elastische Verformung hervorrufen kann.

Dadurch dass die axiale Länge der Wellenberge größer als die Länge der Wellentäler ist und beide Längengrößen etwa im Bereich zwischen 2,3 :1 und 4,6 : 1 liegen, ist der Anteil der biegbaren Bereiche an der Rohrleitung in besonders vorteilhafter Weise herabgesetzt.

Ein weiterer Vorteil dieser zylindrischen, mit Einschnürungen versehenen Rohrleitungen liegt in der stark reduzierten Oberfläche, die sich zum einen durch eine deutliche Materialersparnis gegenüber einem herkömmlichen Wellschlauch und zum anderen durch eine geringere Wärmeabstrahlung auszeichnet und hierbei fast an die Eigenschaften von Rohren angenähert ist.

Zwar sind bereits weitgewellte Schläuche im Stand der Technik bekannt, die aus zylindrischen Wellentälern bestehen, an die sich herkömmliche, im Querschnitt etwa U-förmige und nach außen vorstehende Wellenberge anschließen und mit denen ebenfalls einige Vorteile der vorliegenden Erfindung erzielbar sind; jedoch bestehen an dieser Bauform eine Vielzahl von Nachteilen: Zum einen sind die druckbeaufschlagten außenliegenden Wellenberge in der Form eines herkömmlichen Wellschlauches ausgebildet, wobei das hohe Wellenprofil die Druckfestigkeit herabsetzt und sich die Schläuche unter Druck längen. Außerdem liegt aufgrund der geraden Wellenflanken eine Neigung des Schlauches zu strömungsinduzierten Schwingungen verbunden mit den vorstehend beschriebenen Geräuschentwicklungen vor; zum anderen bilden die glattwandigen Wellentäler einen ungefähr rohrförmigen Strömungsverlauf, der ein Durchströmen der Wellenberge verhindert, welche hierdurch strömungsarme Totzonen und potentielle Schmutznester bilden, was insbesondere im Sanitärbereich problematisch ist. Schließlich ist es auch praktisch unmöglich, eine derartige Rohrleitung wirksam mit einer Isolierung zu versehen, da diese in der Regel nur punktuell an den Wellenkrempen zur Anlage gelangen und in den großen nicht isolierten Zwischenräumen schädliches Kondensat entstehen kann.

All diese Nachteile vermeidet die erfindungsgemäße Rohrleitung durch ihre druckfesteren Wellenberge, durch das Vermeiden von strömungsarmen Leitungsabschnitten und durch die stark an die Außenform eines Rohres angenäherte Gestalt, auf die sich schließlich eine Außenisolierung in einfacher Weise und bei gleichzeitiger großflächiger Anlage an die Leitung aufbringen lässt, wozu sich etwa ein Extrudierverfahren empfiehlt. Die großflächige Anlage der Isolierung an der Rohrleitung reduziert vorhandene Luftpolster in etwaigen Zwischenräumen, wodurch entsprechend weniger Kondensat bei einer Taupunkt-Unterschreitung anfallen kann und somit das Risiko von Korrosion weitgehend ausgeschlossen wird.

In vorteilhafter Weise wird die bereits angesprochene Wärmeisolierung durch Extrusion aufgebracht, wobei sich die Isolierschicht insbesondere an die glattwandigen Wellenberge anschmiegen wird, während die Biegebereiche der Wellentäler von dem Isoliermaterial ausgespart werden. Hierdurch lässt sich verhindern, dass das Abwinkeln der Rohrleitungen durch eine etwaige in den Biegebereichen angeordnete Isolierschicht beeinträchtigt wird. Was das Material der Wärmeisolierung betrifft, so sollte dies so gewählt sein, dass das Abwinkeln der Rohrleitungen beispielsweise durch ein zu straffes Anliegen oder ein zu unnachgiebiges Material nicht behindert wird.

Diese Außenisolierung lässt von außen kaum erkennen, dass die darin verlaufende Rohrleitung mit Wellungen versehen ist, weshalb die erfindungsgemäße Bauform sehr reinigungsfreundlich ist und sich auch für unverschalte sichtbare Leitungsabschnitte eignet.

Was die Profilhöhe der Wellungen, also den radialen Abstand zwischen Wellenberg und Wellental betrifft, so empfiehlt es sich, diese recht gering zu halten, um hierdurch eine flachgewellte Rohrleitung zu erhalten, die sich dadurch auszeichnet, dass die Druckfestigkeit erhöht und beim Ausbilden des Schlauchbördels eine hohe Bördelhöhe erzielt wird. Da der maximale Bördeldurchmesser durch den Kerndurchmesser der Überwurfmutter festgelegt ist, stellt sich bei der erfindungsgemäßen Schlauchleitung durch die reduzierte Profilhöhe ein gegenüber den herkömmlichen Schläuchen wesentlich größerer Innendurchmesser ein, was eine geringere Strömungsgeschwindigkeit und daraus resultierend einen geringeren Druckverlust bewirkt. Schließlich wird in der oben beschriebenen Art und Weise hierbei die Oberfläche noch einmal verkleinert und vor allem die Biegebereiche der Wellentäler derart reduziert, dass schon geringe Abwinklungen den elastischen Biegebereich übersteigen und zu einer plastischen Verbiegung der Wellungen führen, durch die sich erst die angestrebte Semiflexibilität sicherstellen lässt.

Die Profilhöhe ist so groß bemessen, dass der Wellschlauch bezüglich der Größen axiale Länge der einzelnen Wellenberge und Profilhöhe zwischen Wellental und Wellenberg innerhalb des gegenseitigen Verhältnisses dieser Größen im Bereich von 1,7 : 1 bis 2,8 : 1 ausgebildet ist.

Die Rohrleitung selbst ist ringgewellt ausgebildet, wobei die Verwendung des Erfindungsgedankens allerdings auch bei einem schraubengangförmig gewellten Rohr möglich ist. Die Rohrleitung ist vorzugsweise aus einem längsnahtgeschweißten, aus nicht rostendem Stahl bestehenden und eine Wanddicke von weniger als 0,4 mm aufweisenden Rohr gefertigt, das lediglich in den Bereichen der Wellentäler mit den entsprechenden Querschnittsreduzierungen versehen werden muss Hierdurch unterscheidet sich die erfindungsgemäße Rohrleitung auch vom Stand der Technik der Wellrohre mit ihren sinusförmigen oder weitgewellten Wellgeometrien und mit großer Profilhöhe.

Ein weiterer wesentlicher Unterschied sowohl zu der geschilderten Rohrleitung mit zylindrischen Wellentälern und U-förmigen Wellenbergen als auch zu dem Stand der Technik der Rohre und Wellschläuche liegt in der besonderen Eignung der erfindungsgemäßen Rohrleitung für die Bördeltechnik, die bei der schweiß- und lötlosen Herstellung von Anschlussenden bei Wellschläuchen Anwendung findet: Das Bördeln eines Bundes als Dichtfläche und als kraft- und formschlüssiger Anschlag für beispielsweise eine Überwurfmutter kann wie bei einem glattwandigen Rohr durch radiales Ausstellen des zylindrischen Schlauchteiles erreicht werden. Dabei hat die erfindungsgemäße Ausführung gegenüber einem herkömmlichen Wellschlauch den Vorteil, dass Material umgeformt wird, welches nicht schon bereits vorher durch das Wellen einer plastischen Verformung unterzogen wurde.

Desweiteren kann die Bördelhöhe gegenüber dem bekannten Wellschlauch größer ausgeführt und hierdurch eine bessere Dichtwirkung in der Verbindungsstelle und ein sicherer Halt der Überwurfmutter erreicht werden, während bei herkömmlichen Schläuchen aufgrund der meist ungenügenden Bördelhöhe zur Erzielung einer ausreichenden Anlagefläche der Überwurfmutter ein zusätzlicher Haltering eingesetzt werden muss.

Anders als glattwandige Rohre lassen sich die erfindungsgemäßen Rohrleitungen auch als endlose, insbesondere auf Rollen aufgewickelte Meterwaren konfektionieren, wodurch auch hierdurch ein Anstückeln mehrerer Leitungsabschnitte vermieden werden kann und statt dessen ein zwischen zwei Armaturen befindlicher Leitungsstrang auch nur aus einem einzigen durchgehenden gewellten Schlauch hergestellt werden kann.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: einen Abschnitt einer erfindungsgemäßen Rohrleitung 1 in axialer Schnittdarstellung; und
- Figur 2: die Rohrleitung 1 mit einem Anschlussende versehen.

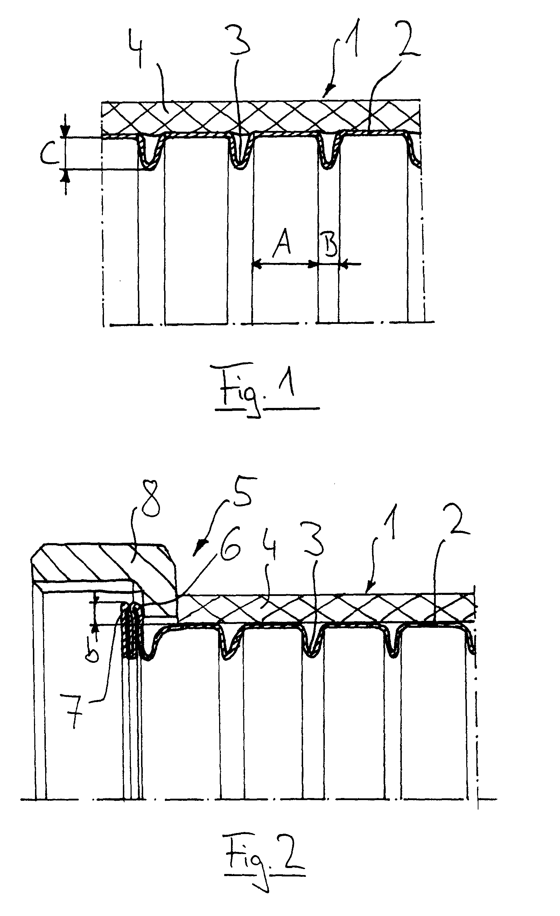

In Figur 1 ist die Form der Wellung des verwendeten Metallschlauches erkennbar, die sich zusammensetzt aus glattwandigen zylindrischen, radial außenliegenden Wellenbergen 2 und jeweils zwei Wellenberge miteinander verbindenden, radial nach innen ragenden Wellentälern 3 mit ungefähr V-förmigem Querschnitt.

Aus Figur 1 läßt sich entnehmen, daß die axiale Länge A der Wellenberge 2 größer ist als die axiale Länge B der Wellentäler 3 und zwar ungefähr um das Dreifache. Dies verdeutlicht die Funktion der Rohrleitung: Während sie sich im Hinblick auf Druckfestigkeit, eine auf der Außenseite aufzubringende Wärmeisolierung, das Vermeiden von Totzonen und die Möglichkeit des Umbördelns an einem glattwandigen Rohr orientiert, werden durch die Querschnittsreduzierungen die angesprochene Semiflexibilität und die hiermit verbundene leichtere Verlegbarkeit, eine gewisse Längselastizität und die Möglichkeit des Umbördelns von Schlauchwellungen erhalten, wozu schon ein geringer gewellter Anteil an der gesamten Rohrleitungslänge ausreicht.

In Figur 1 ist des weiteren noch eine Wärmeisolierung 4 zu erkennen, die sich an die Außenseiten der Wellenberge 2 anschmiegt und die Wellentäler 3 freiläßt, wodurch insbesondere das Abwinkeln der Rohrleitung 1 nicht behindert wird.

Die Länge der Wellenberge führt schließlich dazu, daß dieser Bereich gut durchströmt wird, wodurch das Auftreten von strömungsarmen Totzonen vermieden wird.

In Figur 1 ist noch die radiale Profilhöhe C der Wellung angedeutet, also der Abstand zwischen dem Radius eines Wellenberges und eines Wellentales, wobei diese Profilhöhe bei der erfindungsgemäßen Rohrleitung recht gering, insbesondere im Vergleich zur Länge A der Wellenberge 2, gehalten werden soll, um den Strömungsquerschnitt der Rohrleitung nicht unnötig herabzusetzen.

Figur 2 zeigt ein Anschlußende 5 der Rohrleitung 1, das aus zwei gestauchten endständigen Wellenbergen 6, 7 und eine vor dem Stauchen auf die Rohrleitung 1 aufgesteckte Überwurfmutter 8 gebildet ist, deren Bohrung zur Aufnahme der Rohrleitung kleiner als der Außendurchmesser der gestauchten Wellungen ist. Die Überlappung zwischen gestauchten Wellungen und Überwurfmutter bildet die Dicht- und Anschlagfläche, deren Größe in erkennbarer Weise stark von der Bördelhöhe b, dem Abstand zwischen Außendurchmesser der gestauchten Wellenberge 6, 7 und Außendurchmesser der ungestauchten Wellenberge 2, abhängt. Bei der erfindungsgemäßen Rohrleitung läßt sich in der vorstehend beschriebenen Art und Weise eine deutlich größere Bördelhöhe erzielen a!s beim Stand der Technik der sinusförmigen bzw. weitgewellten Schläuche, die zur Erzielung eines ausreichenden Überlappungsbereiches mit der Überwurfmutter des Zwischenfügen zusätzlicher Halteringe erforderlich machen.

Zusammenfassend stellt die vorliegende Erfindung eine Rohrleitung zur Verfügung, die die Vorteile von starren glattwandigen Rohren mit denjenigen von gewellten Schläuchen kombiniert, indem sie ein semiflexibles Rohr schafft, das sich insbesondere durch eine vereinfachte Verlegbarkeit bei gleichzeitig erhöhter Druckfestigkeit und kostengünstiger Anschlußtechnik auszeichnet.

## Patentansprüche

1. Rohrleitung, insbesondere zur Verwendung in der Haus- und Gebäudetechnik, bestehend aus einem druckdichten, mit ringförmigen Wellungen versehenen Metallschlauch (1),
dadurch gekennzeichnet,
dass die radial außenliegenden Wellenberge (2) der Schlauchwellungen einen im wesentlichen glattzylindrischen Verlauf aufweisen, dass die axiale Länge (A) der einzelnen Wellenberge größer ist als diejenige (B) der radial innenliegenden Wellentäler (3) derart, dass der Metallschlauch bezüglich der Größen axiale Länge (A) der einzelnen Wellenberge (2) und axiale Länge (B) der einzelnen Wellentäler (3) innerhalb des gegenseitigen Verhältnisses dieser Größen im Bereich von 2,3 : 1 bis 4,6 : 1 ausgebildet ist, und dass die axiale Länge (A) der einzelnen Wellenberge größer ist als die radiale Profilhöhe (C) zwischen Wellentälern (3) und Wellenbergen (2) derart, dass der Metallschlauch bezüglich der Größen axiale Länge (A) der einzelnen Wellenberge (2) und Profilhöhe (C) zwischen Wellental (3) und Wellenberg (2) innerhalb des gegenseitigen Verhältnisses dieser Größen im Bereich von 1,7 : 1 bis 2,8 : 1 ausgebildet ist.

2. Rohrleitung nach Anspruch 1,
dadurch gekennzeichnet,
dass der Metallschlauch von einer Wärmeisolierung (4) eingehüllt ist.

3. Rohrleitung nach Anspruch 2,
dadurch gekennzeichnet,
dass die Wärmeisolierung (4) durch Extrudieren aufgebracht wird.

4. Rohrleitung nach zumindest einem der vorstehenden Ansprüche,
dadurch gekennzeichnet,
dass zur Herstellung eines Anschlussendes (5) der Rohrleitung (1) endständige Wellungen (6, 7) durch Bördelung in Axialrichtung gestaucht und hierdurch in ihrem Außendurchmesser vergrößert sind.

5. Rohrleitung nach zumindest einem der vorstehenden Ansprüche,
dadurch gekennzeichnet,
dass die Rohrleitung (1) aus rostfreiem Stahl besteht.

## Claims

1. Piping, especially for use in house and construction technology, consisting of a pressure-tight flexible metal tube (1) provided with annular corrugations,
characterised in that
the radially outer peaks (2) of the tube corrugations have a substantially plain-cylindrical curve; the axial length (A) of the individual peaks is greater than that (B) of the radially inner valleys (3) in such a manner that the flexible metal tube, in respect of the variables axial length (A) of the individual peaks (2) and axial length (B) of the individual valleys (3), is constructed so that the ratio of those variables to one another lies in the range from 2.3 : 1 to 4.6 : 1; and the axial length (A) of the individual peaks is greater than the radial profile height (C) between valleys (3) and peaks (2) in such a manner that the flexible metal tube, in respect of the variables axial length (A) of the individual peaks (2) and profile height (C) between valley (3) and peak (2), is constructed so that the ratio of those variables to one another lies in range from 1.7 : 1 to 2.8 : 1.

2. Piping according to claim 1,
characterised in that
the flexible metal tube is surrounded by a heat insulator (4).

3. Piping according to claim 2,
characterised in that
the heat insulator (4) is applied by extrusion.

4. Piping according to at least one of the preceding claims,
characterised in that
in order to create a connector end (5) on the piping (1), terminal corrugations (6, 7) are compressed in the axial direction by the formation of a flange and their outer diameter is thereby increased.

5. Piping according to at least one of the preceding claims,
characterised in that
the piping (1) is made of stainless steel.

## Revendications

1. Conduite, notamment destinée à être utilisée en technique ménagère et du bâtiment, composée d'un tuyau souple en métal (1) étanche et muni d'ondulations annulaires, caractérisée en ce que les sommets (2) situés radialement à l'extérieur des ondulations du tuyau souple présentent un tracé essentiellement en forme de cylindre lisse, en ce que la longueur axiale (A) des différents sommets est supérieure à celle (B) des creux (3) situés radialement à l'intérieur, de sorte que le tuyau souple en métal est réalisé avec des dimensions longueur axiale (A) des différents sommets (2) et longueur axiale (B) des différents creux (3) situées dans un rapport compris entre 2,3 : 1 à 4,6 : 1, et en ce que la longueur axiale (A) des différents sommets est supérieure à la hauteur de profil radiale (C) entre les creux (3) et les sommets (2), si bien que le tuyau souple en métal est réalisé avec des dimensions longueur axiale (A) des différents sommets (2) et hauteur de profil (C) entre creux (3) et sommet (2) situées dans un rapport compris entre 1,7 : 1 à 2,8 : 1.

2. Conduite selon la revendication 1, caractérisée en ce que le tuyau souple en métal est entouré d'un calorifugeage (4).

3. Conduite selon la revendication 2, caractérisée en ce que le calorifugeage (4) est appliqué par extrusion.

4. Conduite selon au moins l'une des revendications précédentes, caractérisée en ce que, pour réaliser une extrémité de raccordement (5) de la conduite (1), on comprime des ondulations d'extrémité (6, 7) dans la direction axiale par bordage, et on en augmente ainsi le diamètre extérieur.

5. Conduite selon au moins l'une des revendications précédentes, caractérisée en ce que la conduite (1) est composée d'acier inoxydable.
